(19) Europäisches Patentamt
European Patent Office
Office européen des brevets

(11) **EP 2 668 090 B1**

(12) **FASCICULE DE BREVET EUROPEEN**

(45) Date de publication et mention
de la délivrance du brevet:
**13.03.2019 Bulletin 2019/11**

(21) Numéro de dépôt: **12705377.5**

(22) Date de dépôt: **25.01.2012**

(51) Int Cl.:
***B63B 39/03*** *(2006.01)*     ***B63B 35/44*** *(2006.01)*

(86) Numéro de dépôt international:
**PCT/FR2012/050163**

(87) Numéro de publication internationale:
**WO 2012/101383 (02.08.2012 Gazette 2012/31)**

(54) **CORPS FLOTTANT ANNULAIRE.**

RINGFÖRMIGER BOJENKÖRPER

ANNULAR BUOYANT BODY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.01.2011 FR 1150570**

(43) Date de publication de la demande:
**04.12.2013 Bulletin 2013/49**

(73) Titulaire: **Ideol**
**13600 La Ciotat (FR)**

(72) Inventeur: **CHOISNET, Thomas**
**F-83270 Saint Cyr Sur Mer (FR)**

(74) Mandataire: **Calvo de Nó, Rodrigo et al**
**Cabinet Beau de Loménie**
**158, rue de l'Université**
**75340 Paris Cedex 07 (FR)**

(56) Documents cités:
**EP-A1- 1 719 697      FR-A1- 2 069 975
US-A- 5 098 226      US-A1- 2006 045 628
US-A1- 2009 126 616**

**Description**

La présente invention concerne un corps flottant, ainsi qu'un procédé d'extinction au moins partielle d'un mouvement de pilonnement d'un tel corps flottant.

Les corps flottants soumis à une houle sont aptes à osciller en plusieurs directions. On entend par « pilonnement » un tel mouvement d'oscillation induit par la houle dans une direction verticale. Comme d'autres mouvements oscillatoires des corps flottants, le pilonnement présente plusieurs inconvénients. A part l'évident inconfort pouvant être expérimenté à bord d'un corps flottant soumis à un tel pilonnement, ce mouvement induit des accélérations importantes sur la plate-forme qui impactent négativement les structures supportées, surtout avec des houles présentant une période proche ou égale à une période propre du corps flottant en pilonnement.

La période propre $T_{heave}$ d'un corps flottant en pilonnement peut être exprimée par l'équation suivante :

$$T_{heave} = 2\pi \sqrt{\frac{M+M_a}{\rho g S_o}} \qquad\qquad (1)$$

dans laquelle $T_{heave}$ représente la période propre en pilonnement, M la masse propre du corps flottant, $\rho$ la masse volumique de l'eau, g l'accélération gravitationnelle, et $S_o$ la surface de flottaison du corps flottant. $M_a$ représente la masse ajoutée du corps flottant telle que communément définie par l'homme de métier. Cette masse ajoutée $M_a$ est variable en fonction de la forme du corps flottant, son tirant d'eau, la période de la houle et autres facteurs, et peut être calculée, par exemple, à l'aide d'un code de diffraction-radiation reconnu. Sauf indication contraire, toutes les variables dans les équations et formules de la présente description utilisent les unités de mesure du Système International.

Les efforts exercés sur le corps flottant comprennent d'une part les forces de Froude-Krylov associées au champ de pression variable généré par la houle non perturbée par le corps flottant, et d'autre part les forces de diffraction associées à la diffraction de la houle par le corps flottant. Ces efforts peuvent aussi être calculés à l'aide de codes de diffraction-radiation.

Des corps flottants comportant des ouvertures en puits (« moonpools », en anglais) sont connus de l'homme du métier, notamment parmi les plateformes flottantes de forage. Par ouverture centrale « en puits » on entend que l'ouverture traverse le corps flottant de haut en bas, en passant par le plan de flottaison. Leur comportement dynamique, et notamment l'oscillation verticale (« mode piston ») de la masse d'eau dans l'ouverture en puits a plutôt été perçue comme un inconvénient. Dans l'article « On the piston and sloshing modes in moonpools » (J. Fluid Mech. (2001), vol. 430, pp. 27-50), B. Molin a analysé ce "mode piston" d'oscillation verticale de la masse d'eau contenue dans des telles ouvertures en puits sur des plateformes flottantes. En revanche, il n'y a pas été proposé d'utiliser cette oscillation pour contrecarrer les efforts d'excitation exercés par la houle sur le corps flottant.

Les demandes de brevet américain US 2009/126616 A1 et US 2006/045628 A1 ont chacune décrit un corps flottant comportant une ouverture en puits adaptée pour augmenter la masse ajoutée d'eau entraînée verticalement avec le corps flottant, pour augmenter l'inertie du corps flottant et donc sa période propre en pilonnement, afin que celle-ci soit au-dessus de la plage normale de périodes de la houle. Toutefois, ceci présente l'inconvénient de pouvoir conduire à une augmentation des efforts excitateurs exercés par la houle sur le corps flottant.

L'invention vise à proposer un corps flottant dont le mouvement de pilonnement soit minimisé, en particulier au voisinage de la fréquence propre en pilonnement de ce corps flottant.

Dans au moins un mode de réalisation d'un corps flottant suivant l'invention, ce but est atteint grâce au fait que le corps flottant est un corps flottant annulaire comportant une ouverture centrale en puits et est configuré tel que, dans l'eau, avec une houle d'une période sensiblement égale à une période propre du corps flottant en pilonnement, des efforts verticaux exercés sur le corps flottant par une masse d'eau oscillant dans l'ouverture centrale en opposition de phase par rapport à la houle, compensent au moins partiellement des efforts excitateurs verticaux exercés sur le corps flottant par la houle. Dans le contexte de la présente description, il doit être clair pour la personne du métier que, par « période sensiblement égale à une période propre en pilonnement », on ne doit pas nécessairement comprendre une période précisément égale à ladite période propre, mais qu'une certaine variation par rapport à cette période propre, par exemple de plus ou moins 15%, est acceptable.

Grâce à ces dispositions, il est possible de réduire très sensiblement le pilonnement du corps flottant. En outre, ces dispositions présentent des avantages additionnels pour certaines applications. En effet, pour que les efforts verticaux exercés sur le corps flottant par une masse d'eau oscillant dans l'ouverture centrale de manière déphasée par rapport à la houle puissent compenser au moins partiellement les efforts verticaux exercés sur le corps flottant par la houle, le tirant d'eau du corps flottant devra normalement être limité, et la surface de l'ouverture en puits particulièrement importante par rapport à la surface de flottaison. Bien que ceci augmente très sensiblement les dimensions globales du corps flottant par rapport à son tonnage, une telle configuration annulaire large bénéficie aussi à sa stabilité statique, au point de pouvoir éventuellement se passer d'un système de ballast, même avec des superstructures au centre de gravité particulièrement élevé, telles que les turbines éoliennes.

Afin d'obtenir une opposition de phase entre la masse d'eau oscillant dans l'ouverture centrale du corps flottant et la houle, tout en préservant la robustesse de la structure du corps flottant, la période propre $T_{piston}$ du mode piston d'oscillation verticale de la masse d'eau dans l'ouverture centrale correspond à entre 1,25 et 1,55 fois la période propre $T_{heave}$ d'un corps flottant en pilonnement.

Pour une approximation de la période propre $T_{piston}$ du mode piston d'oscillation de la masse d'eau dans l'ouverture centrale d'un corps flottant à parois sensiblement verticales, il est possible d'utiliser la formule suivante :

$$T_{piston} \cong 2\pi\sqrt{\frac{d+k\sqrt{S_1}}{g}} \qquad (2)$$

Dans cette formule $S_1$ représente la surface de l'ouverture centrale, g est l'accélération gravitationnelle, et k est un coefficient dont la valeur, si l'on assimile l'ouverture centrale à une ouverture carrée de la même surface, peut être considérée comme étant égale à 0,52, suivant l'article "On the piston and sloshing modes in moonpools" de B. Molin, (J. Fluid Mech. (2001), vol. 430, pp. 27-50).

Le rapport entre la période propre $T_{piston}$ de la masse d'eau oscillant dans l'ouverture centrale et la période propre $T_{heave}$ d'un corps flottant en pilonnement peut donc être exprimé par la formule :

$$\frac{T_{piston}}{T_{heave}} \cong \sqrt{\frac{\rho S_0(d+0,52\sqrt{S_1})}{M+M_a}} \qquad (3)$$

En conséquence, les dimensions du corps flottant et de son ouverture centrale suivent la formule :

$$1,25 < \sqrt{\frac{\rho S_0(d+0,52\sqrt{S_1})}{M+M_a}} < 1,55 \qquad (4)$$

dans laquelle la masse ajoutée $M_a$ est normalement entre 0,45 et 0,85 fois la masse M du corps flottant, suivant la configuration de celui-ci.

Il est toutefois possible d'utiliser des instruments numériques, tels que des logiciels d'analyse hydrodynamique bien connus de la personne du métier comme WAMIT®, Principia Diodore™, ANSYS® AQWA ou autres, pour un calcul plus précis des périodes propres $T_{piston}$ et $T_{heave}$, de la période d'extinction $T_{effort}$, de l'ensemble des efforts excitateurs verticaux exercés sur les différents corps flottants, et de la réponse en pilonnement des corps flottants en fonction de la période de la houle.

Ainsi, dans au moins un mode de réalisation particulier, le corps flottant annulaire comporte au moins une charge utile. En particulier, cette au moins une charge utile peut être un dispositif d'exploitation d'énergie, comme, par exemple, une turbine éolienne, mais aussi d'autres dispositifs d'exploitation des énergies marines, telles que l'énergie des vagues, de la houle, des marées ou des courants, l'énergie thermique des mers, l'énergie osmotique de la mer, ou autres. Parmi les turbines éoliennes, tous les types de turbines éoliennes connus de la personne du métier peuvent être envisagés, par exemple à axe vertical ou horizontal, avec un ou plusieurs rotors, avec ou sans boîte réductrice interposée entre rotor et générateur, ou avec un nombre quelconque des pales.

Comme le corps flottant a une configuration annulaire, l'au moins une charge utile peut être située excentrée par rapport au corps flottant. Dans ce cas, le corps flottant annulaire peut présenter un plus grand volume immergé à proximité de l'au moins une charge utile, afin d'équilibrer le poids de la charge utile.

Afin d'assurer un maintien de position du corps flottant, il peut aussi comporter au moins un dispositif d'ancrage, tel qu'un dispositif d'ancrage sur tourelle, à cap fixe, câble, chaine, ou autre. En outre, il peut aussi comporter au moins un dispositif d'amortissement de roulis, incorporant par exemple une quille anti-roulis, une cuve anti-roulis ou un arrangement de plusieurs cuves anti-roulis reliées par des tubes en « U », etc.

Afin d'ajuster les propriétés dynamiques du corps flottant, il est par exemple possible d'augmenter la masse ajoutée d'eau suivant le corps flottant dans son mouvement vertical en incorporant au corps flottant au moins un appendice externe, tel que, par exemple, une jupe ou des plaques. Il est aussi possible d'incorporer au corps flottant au moins un appendice dans l'ouverture centrale pour ajuster tant la période propre en pilonnement, que la période de houle à laquelle la masse d'eau dans l'ouverture centrale oscillera en opposition de phase par rapport à la houle. Avec ces appendices, la masse ajoutée $M_a$ d'eau oscillant avec le corps flottant peut être entre 0,55 et 0,85 fois la masse M du corps situer entre 0,45 et 0,65 fois la masse M du corps flottant. Afin d'augmenter l'amortissement visqueux du ballotement de la masse d'eau, le corps flottant peut aussi comprendre, dans un pourtour de l'ouverture centrale, au moins une chambre d'amortissement en communication restreinte avec l'ouverture centrale.

La présente description concerne aussi un procédé d'extinction au moins partielle d'un mouvement de pilonnement d'un corps flottant dans l'eau soumis à une houle d'une période sensiblement égale à une période propre en pilonnement, suivant la revendication 10, dans lequel ledit corps flottant présente une ouverture centrale en puits dans laquelle oscille une masse d'eau en opposition de phase par rapport à la houle, pour exercer sur le corps flottant des efforts verticaux opposés à des efforts excitateurs verticaux exercés par la houle.

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :

- la figure la est une vue schématique du haut d'un corps flottant suivant un premier mode de réalisation de l'invention ;
- la figure 1b est une vue schématique de côté du corps flottant de la figure la ;
- la figure 2 est un graphique comparatif illustrant la réponse du corps flottant de la figure la en pilonnement en fonction de la période de la houle, comparée à un corps flottant sans ouverture centrale, ainsi qu'à un corps flottant annulaire, non configuré pour ce que la masse d'eau dans l'ouverture centrale compense au moins partiellement l'effort vertical exercé par la houle ;
- la figure 3a est un graphique illustrant tant la réponse du corps flottant de la figure la en pilonnement que les efforts excitateurs verticaux globaux exercés sur ce corps flottant, en fonction de la période de la houle ;
- la figure 3b illustre à titre comparatif la réponse d'un corps flottant non configuré pour ce que la masse d'eau dans l'ouverture centrale compense au moins partiellement les efforts excitateurs verticaux exercés par la houle ;
- les figures 4a et 4b illustrent schématiquement le mouvement du corps flottant de la figure la et de la masse d'eau dans son ouverture centrale avec une houle proche ou égale à la période propre en pilonnement du corps flottant ;
- les figures 5a, 5b, 5c et 5d illustrent schématiquement des vues du haut de corps flottants suivant différents modes de réalisation de l'invention ;
- les lignes 6a, 6b et 6c illustrent schématiquement trois modes de réalisation différents de corps flottants avec des plaques horizontales en projection dans l'ouverture centrale ;
- la figure 7 illustre schématiquement un mode de réalisation d'un corps flottant avec des chambres d'amortissement autour de l'ouverture centrale ;
- la figure 8 illustre schématiquement un mode de réalisation d'un corps flottant avec des grilles anti-roulis ; et
- la figure 9 illustre schématiquement un dispositif anti-roulis pour un corps flottant suivant un autre mode de réalisation

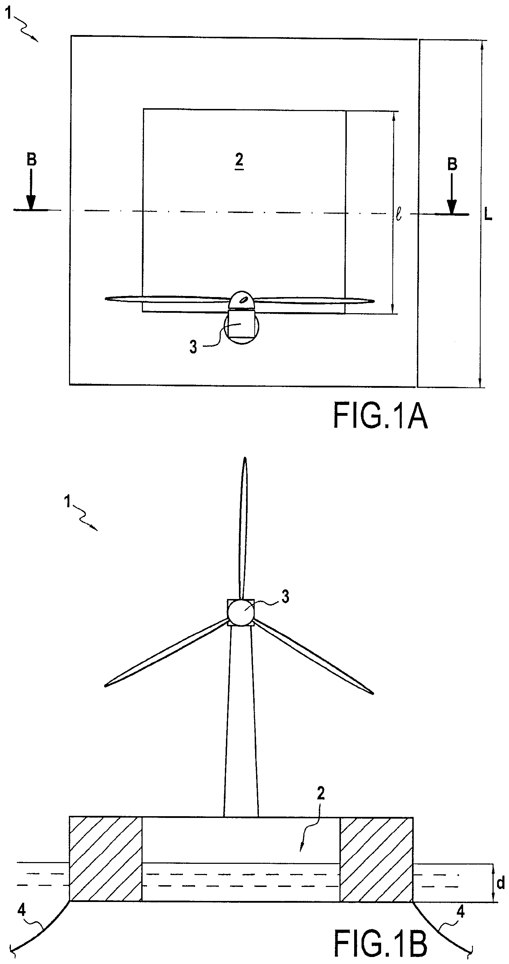

Un corps flottant annulaire 1 suivant un premier mode de réalisation de l'invention est illustré sur les figures 1a et 1b. Ce corps flottant 1 a une forme carrée et présente une ouverture centrale 2 en puits de forme également carrée. Le corps flottant 1 comprend aussi une turbine éolienne 3 située excentrée sur le corps flottant 1. Bien que la turbine éolienne 3 illustrée soit une turbine à rotor à axe horizontal, d'autres types de turbines éoliennes, à axe horizontal ou vertical, avec un ou plusieurs rotors, avec ou sans boîte réductrice interposée entre rotor et générateur, ou avec un nombre quelconque des pales, peuvent aussi être envisagés. Il serait aussi envisageable d'installer plusieurs turbines éoliennes sur un même corps flottant. En outre, un tel corps flottant peut aussi alternativement servir à soutenir d'autres types d'installations, comme par exemple d'autres types de dispositifs d'exploitation des énergies marines, telles que l'énergie des vagues, de la houle, des marées ou des courants, l'énergie thermique des mers, l'énergie osmotique de la mer, ou autres.. Le corps flottant 1 comporte aussi un dispositif d'ancrage comprenant, dans ce mode de réalisation, une pluralité de lignes d'ancrage 4. Toutefois, d'autres dispositifs d'ancrage alternatifs connus de la personne du métier peuvent aussi être envisagés.

Le corps flottant 1 présente un faible tirant d'eau, permettant ainsi son utilisation dans des eaux peu profondes, ainsi qu'un bas franc-bord, permettant un accès facile pour les opérations de maintenance de la turbine éolienne 3.

Le corps flottant 1 et son ouverture centrale 2 sont dimensionnés tels que dans l'eau, avec une houle d'une période sensiblement égale à une période propre du corps flottant en pilonnement, la masse d'eau dans l'ouverture centrale 2 oscille sensiblement en opposition de phase à la houle. De cette manière, les efforts verticaux exercés sur le corps flottant par cette masse d'eau oscillant dans l'ouverture centrale sensiblement en opposition de phase par rapport à la houle, seront également sensiblement en opposition de phase aux efforts excitateurs verticaux exercés sur le corps flottant par la houle.

Tant la masse ajoutée $M_a$ que les efforts verticaux exercés par la houle et par l'oscillation verticale de la masse d'eau dans l'ouverture centrale 2 en fonction de la période de la houle pour différentes configurations du corps flottant: 1, et donc le rapport optimal entre période propre $T_{piston}$ et la période propre $T_{heave}$ pour l'extinction des efforts d'excitation verticaux peuvent être calculés avec des codes de diffraction-radiation connus de la personne du métier. Pour un corps flottant 1 présentant la configuration illustrée sur les figures 1A et 1B, la masse ajoutée $M_a$ est d'environ 0,55 fois M, tandis que le rapport optimal $T_{piston}/T_{heave}$ pour obtenir une opposition de phase de l'oscillation de la masse d'eau dans l'ouverture centrale par rapport à la houle est entre 1,25 et 1,55, en particulier autour de 1,40. En appliquant ces valeurs à l'équation (3), on déduit que, si l'ouverture centrale 2 est carrée, la longueur l d'un côté de l'ouverture centrale 2 est d'environ 4,0 fois le tirant d'eau d. Si on applique ce rapport pour substituer le tirant d'eau d dans l'équation du déplacement du corps flottant 1 carré :

$$M = \rho(L^2 - l^2)d \qquad (5)$$

on obtient le polynôme de troisième degré suivant :

$$\frac{\rho}{4,0}l^3 - \frac{\rho L^2}{4,0}l + M = 0 \qquad (6)$$

A partir d'un déplacement M et d'une longueur L du corps flottant 1 donnés, il est ainsi possible de calculer la taille optimale de l'ouverture centrale 2 pour obtenir une opposition de phase de la masse d'eau dans l'ouverture centrale par rapport: à la houle et donc une extinction au moins partielle des efforts verticaux d'excitation verticaux exercés sur le corps flottant 1. A partir des longueurs L et l et du déplacement M, le tirant d'eau d peut aussi être calculé directement.

Ainsi, pour une extinction au moins partielle des efforts d'excitation verticaux sur un corps flottant 1 carré avec un déplacement M de 5900 tonnes métriques et une longueur L de 39 m de côté, à la période propre $T_{heave}$ de pilonnement du corps flottant 1, chaque côté de son ouverture centrale 2, également carrée, peut présenter une longueur l de 23 m. Avec ces dimensions, et dans de l'eau de mer d'une densité d'environ 1027 kg/m$^3$, le corps flottant 1 présentera un tirant d'eau d de 5,8 m. Endéans l'intervalle défini par la formule (4), si la forme carrée avec L=39 m et l=23 m est maintenue, des modes de réalisation alternatifs peuvent être envisagés avec des tonnages différents et un tirant d'eau variant entre 4,4 m et 8,4 m.

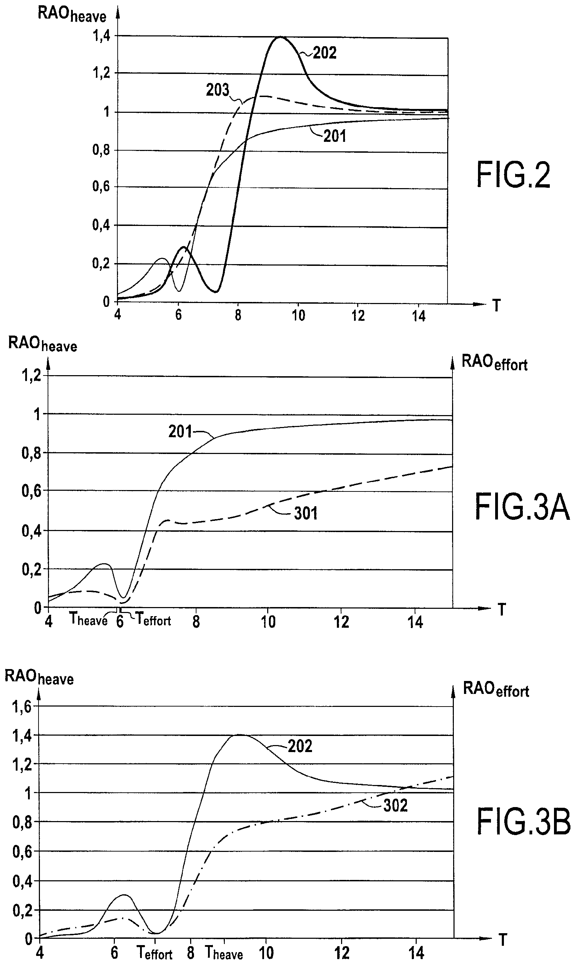

Sur la figure 2 sont illustrées les réponses du corps flottant 1, d'un autre corps flottant présentant aussi une ouverture centrale, cependant non optimisée pour minimiser le pilonnement du corps flottant, et d'un corps flottant sans ouverture centrale. La courbe 201 représente la fonction de transfert $RAO_{heave}$ entre l'amplitude de la houle et l'amplitude du pilonnement du corps flottant 1. La courbe 202 représente, à titre comparatif, la fonction de transfert entre l'amplitude de la houle et l'amplitude du corps flottant annulaire non optimisé, et la courbe 203 celle correspondant au corps flottant sans ouverture centrale.

Comme on peut voir dans la courbe 203, le corps flottant sans ouverture centrale présente une période propre d'environ 8,5 s, à laquelle la fonction de transfert $RAO_{heave}$ atteint un maximum de 1,08. Le corps flottant annulaire non optimisé dont la réponse est représentée par la courbe 202 présente un maximum encore plus marqué de presque 1,4 à une période propre d'environ 9,5 s. Par contre, la courbe 201 correspondant au corps flottant annulaire 1 suivant le premier mode de réalisation ne présente pas un tel maximum, et ne dépasse pas une valeur de 1.

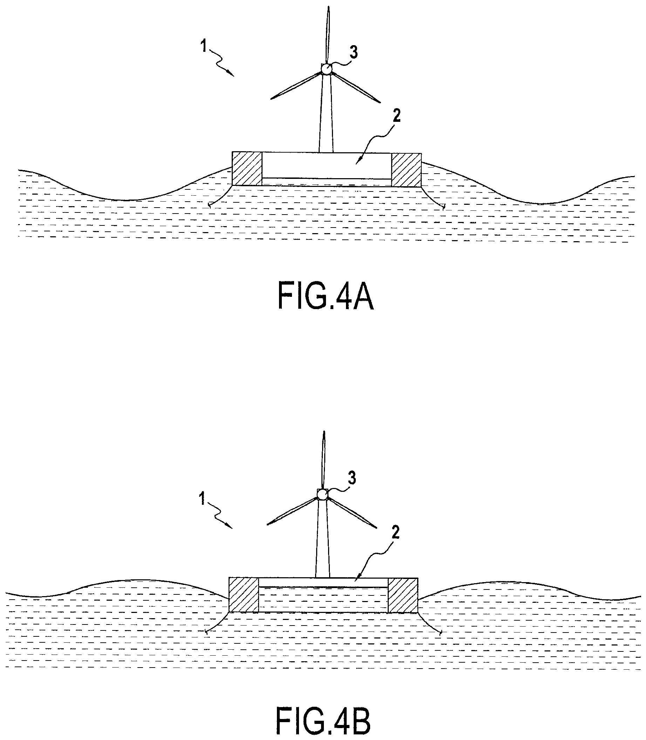

Ceci est dû à ce que la période propre en pilonnement $T_{heave}$ du corps flottant 1, qui dans cet exemple est de 5,8 s, correspond approximativement à un minimum dans l'amplitude de l'effort excitateur vertical exercé par l'eau sur le corps flottant 1. Sur la figure 3a, dans laquelle la courbe 201 est superposée à une courbe 301 représentant la fonction de transfert $RAO_{effort}$ entre l'amplitude de la houle et l'amplitude de l'ensemble des efforts excitateurs verticaux sur le corps flottant 1, on peut voir comment cette courbe 301 présente un minimum à une période $T_{effort}$, dans cet exemple 6,1 s, très proche de la période propre en pilonnement $T_{heave}$ du corps flottant 1. Ceci est causé par l'oscillation verticale de la masse d'eau dans l'ouverture centrale 2, déphasée par rapport à la houle et annulant au moins partiellement l'effort excitateur exercé par la houle sur le corps flottant 1 à cette période $T_{effort}$ et à des périodes proches, comme représenté schématiquement sur les figures 4a et 4b.

L'oscillation verticale en mode piston de la masse d'eau contenue dans l'ouverture centrale 2 présente alors, en effet, une opposition de phase par rapport à la houle. Les entrées et sorties de cette masse d'eau induisent un écoulement oscillant autour du corps flottant 1 qui viendra compenser au moins partiellement le champ de pression de la houle sur le corps flottant 1. Ceci peut aussi être exprimé comme une opposition de phase entre les forces de Froude-Krylov et les forces de diffraction exercées sur le corps flottant.

Pour une bonne efficacité du dispositif, la période propre du mode piston $T_{piston}$ devrait être supérieure à la période propre en pilonnement $T_{heave}$ du corps flottant. La période d'extinction des efforts excitateurs est quant à elle en général intercalée entre la période propre du mode piston $T_{piston}$ et la période propre en pilonnement $T_{heave}$ du corps flottant 1. On a ainsi de manière générale $T_{heave} < T_{effort} < T_{piston}$.

A titre comparatif, sur la figure 3b, la courbe 202 de la réponse $RAO_{heave}$ du corps flottant annulaire non optimisé est superposée à une courbe 302 représentant la fonction de transfert $RAO_{effort}$ entre l'amplitude de la houle et l'amplitude des efforts excitateurs verticaux sur le corps flottant annulaire non optimisé, et qui présente une période propre en pilonnement $T_{heave}$ de 9,5 s. Comme dans ce cas la période $T_{heave}$ n'est pas proche de la période $T_{effort}$, les efforts excitateurs exercés par la houle sur le corps flottant non-optimisé ne sont pas sensiblement diminués par l'oscillation verticale de la masse d'eau dans son ouverture centrale. Bien au contraire, la résonance en pilonnement y est même aggravée par rapport à un corps flottant sans ouverture centrale.

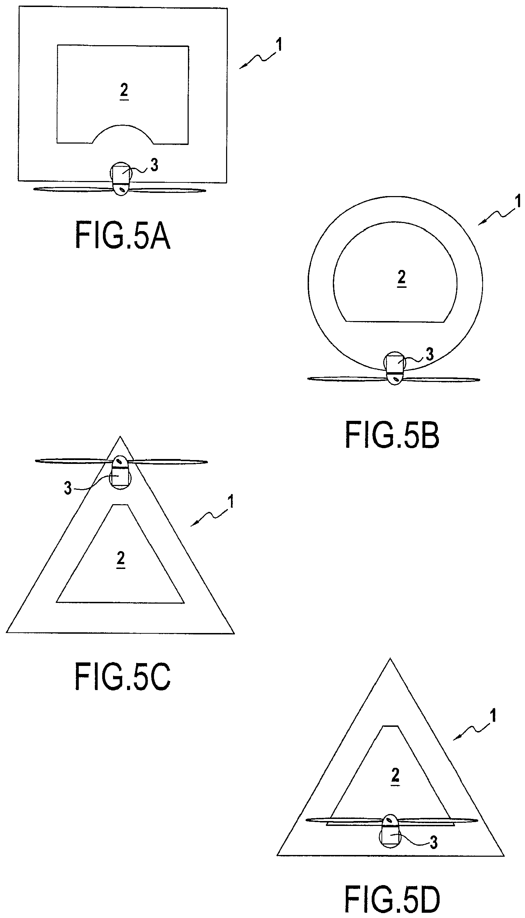

Afin d'équilibrer le corps flottant 1 et compenser le poids de la turbine éolienne 3, le corps flottant 1 est lesté du côté opposé de cette turbine éolienne 3. Toutefois, dans un mode de réalisation alternatif illustré sur la figure 5a, le poids en ballast peut être minimisé en augmentant le volume immergé, et donc le déplacement, du corps flottant 1 à proximité de la turbine éolienne 3. En outre, dans d'autres modes de réalisation, le corps flottant 1 peut avoir de formes autres que la forme carrée du premier mode de réalisation. Ainsi, dans le mode de réalisation illustré sur la figure 5b, le corps flottant 1 a une forme circulaire, et dans ceux illustré sur la figure 5c et 5d, des formes triangulaires.

Les corps flottants suivant les différent modes de réalisation de l'invention peuvent être construits avec une variété de matériaux, tels que, par exemple, des matériaux métalliques ferreux, comme l'acier, ou non-ferreux, comme l'aluminium ou ses alliages, des matériaux minéraux tels que le béton, ou des matériaux synthétiques, dont les matériaux composites, ainsi que des combinaisons de plusieurs de ces matériaux différents.

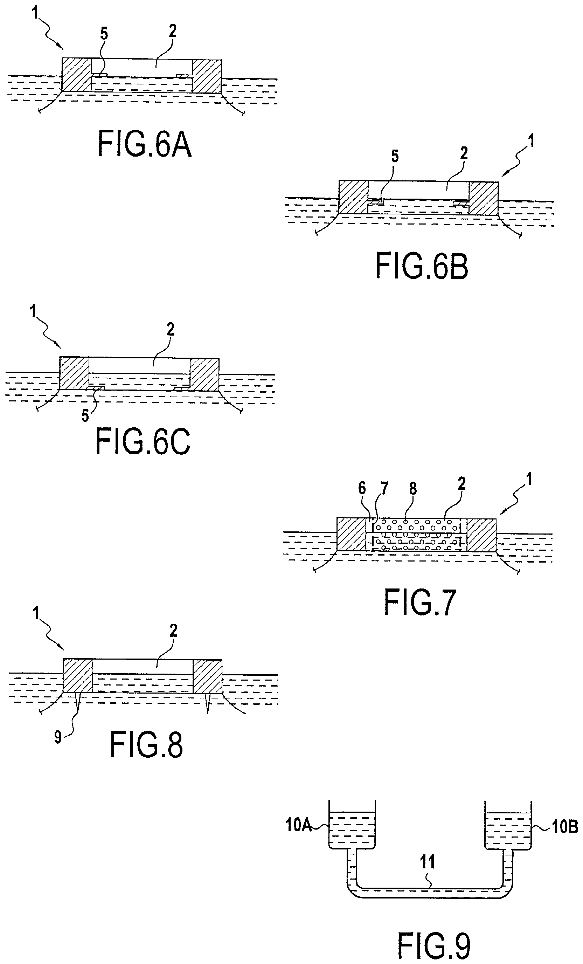

En outre, un corps flottant suivant un quelconque des modes de réalisation peut aussi comprendre des appendices sur son pourtour extérieur et/ou dans l'ouverture centrale, afin d'augmenter la masse ajoutée d'eau accompagnant le corps flottant dans ses mouvements verticaux et/ou modifier la période propre $T_{piston}$ du mode piston d'oscillation de la masse d'eau dans l'ouverture centrale. Les figures 6a, 6b et 6c illustrent ainsi trois configurations potentielles de plaques horizontales 5 installées sur le pourtour de l'ouverture centrale 2 d'un tel corps flottant 1 pour l'ajustement de la période propre $T_{piston}$. Pour amortir le ballotement de l'eau dans l'ouverture centrale 2, celle-ci peut aussi présenter, sur son pourtour, des chambres d'amortissement 6 séparées du centre de l'ouverture centrale 2 par des parois 7 présentant des orifices 8 pour le passage de l'eau comme illustré sur la figure 7. Des dispositifs d'amortissement de roulis, tels que, par exemple, des quilles anti-roulis, ou des arrangements de cuves anti-roulis actifs ou passifs, peuvent aussi être incorporés au corps flottant. La figure 8 illustre un corps flottant 1 avec des quilles anti-roulis 9 dont la résistance hydrodynamique amortit les oscillations en roulis du corps flottant. Une cuve anti-roulis passive est une cuve contenant une masse de liquide et dimensionnée telle que le ballottement du liquide amortisse le roulis. Un arrangement actif de cuves anti-roulis, illustré sur la figure 9, comporte deux cuves anti-roulis 10A et 10B, reliées par le fond par un tube 11 en U et remplies d'une masse de liquide. Dans ce cas, le roulis induit un déplacement de liquide, à travers le tube 11, entre les cuves 10A et 10B. Par la résistance du tube 11 à l'écoulement du liquide, il est possible d'amortir le roulis. Le tube 11 peut comporter des moyens d'ajuster cette résistance à l'écoulement.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

**1.** Corps flottant annulaire (1) comportant une ouverture centrale (2) en puits, **caractérisé en ce qu'**il est configuré avec une surface de flottaison $S_0$, une surface $S_1$ de l'ouverture centrale dans un plan de flottaison, un tirant d'eau d et une masse M, suivant la formule :

$$1,25 < \sqrt{\frac{\rho S_0(d + 0,52\sqrt{S_1})}{M + M_a}} < 1,55$$

dans laquelle p est une masse volumique de l'eau et $M_a$ une masse ajoutée d'eau oscillant en phase avec le corps flottant (1) et correspondant à entre 0,45 et 0,85 fois la masse M du corps flottant, de manière à ce qu'une période propre $T_{piston}$ d'un mode piston d'oscillation verticale de ladite masse d'eau dans l'ouverture centrale (2) soit entre 1,25 et 1,55 fois une période propre $T_{heave}$ du corps flottant (1) en pilonnement, pour que, dans l'eau, avec une houle d'une période sensiblement égale à une période propre du corps flottant (1) en mouvement de pilonnement, des efforts verticaux exercés sur le corps flottant (1) par une masse d'eau oscillant dans l'ouverture centrale (2) en opposition de phase par rapport à la houle, compensent au moins partiellement des efforts excitateurs verticaux exercés sur le corps flottant (1) par la houle.

**2.** Corps flottant annulaire (1) suivant la revendication 1, comportant au moins une charge utile.

**3.** Corps flottant annulaire (1) suivant la revendication 2, dans lequel ladite au moins une charge utile comprend au moins un dispositif d'exploitation d'énergie.

4. Corps flottant annulaire (1) suivant l'une quelconque des revendications 2 ou 3, dans lequel l'au moins une charge utile est située excentrée par rapport au corps flottant (1).

5. Corps flottant annulaire (1) suivant la revendication 4, présentant un plus grand volume immergé à proximité de l'au moins une charge utile.

6. Corps flottant annulaire (1) suivant une quelconque des revendications précédentes, comportant en outre au moins un dispositif d'ancrage.

7. Corps flottant annulaire (1) suivant une quelconque des revendications précédentes, comportant en outre au moins un dispositif d'amortissement de roulis.

8. Corps flottant annulaire (1) suivant une quelconque des revendications précédentes, comportant en outre au moins un appendice externe et/ou dans l'ouverture centrale pour ajuster les caractéristiques hydrodynamiques du corps flottant.

9. Corps flottant annulaire (1) suivant une quelconque des revendications précédentes, comportant en outre, dans un pourtour de l'ouverture centrale, au moins une chambre d'amortissement en communication restreinte avec l'ouverture centrale (2).

10. Procédé d'extinction au moins partielle d'un mouvement de pilonnement d'un corps flottant (1) dans l'eau soumis à une houle d'une période sensiblement égale à une période propre en pilonnement, dans lequel ledit corps flottant (1) présente une surface de flottaison $S_0$, une ouverture centrale (2) en puits avec une surface $S_1$ dans un plan de flottaison, un tirant d'eau d et une masse M suivant la formule :

$$1,25 < \sqrt{\frac{\rho S_0(d + 0{,}52\sqrt{S_1})}{M + M_a}} < 1,55$$

dans laquelle p est une masse volumique de l'eau et $M_a$ une masse ajoutée d'eau oscillant en phase avec le corps flottant (1) et correspondant à entre 0,45 et 0,85 fois la masse M du corps flottant, de manière à ce que la période propre $T_{piston}$ d'un mode piston d'oscillation verticale d'une masse d'eau dans l'ouverture centrale (2) soit entre 1,25 et 1,55 fois une période propre $T_{heave}$ du corps flottant (1) en pilonnement, pour que ladite masse d'eau dans l'ouverture centrale (2) oscille en opposition de phase par rapport à la houle, pour exercer sur le corps flottant des efforts verticaux opposés à des efforts excitateurs verticaux exercés par la houle.

**Patentansprüche**

1. Ringförmiger Schwimmkörper (1), umfassend eine mittige Schachtöffnung (2), **dadurch gekennzeichnet, dass** er mit einer Wasserlinienfläche $S_0$, einer Fläche $S_1$ der mittigen Öffnung in einer Wasserlinienebene, einem Tiefgang d und einer Masse M gemäß der folgenden Formel ausgestaltet ist:

$$1,25 < \sqrt{\frac{\rho S_0(d + 0{,}52\sqrt{S_1})}{M + M_a}} < 1,55$$

in der $\rho$ eine Dichte des Wassers und $M_a$ eine zusätzliche Masse von phasengleich mit dem Schwimmkörper (1) schwingendem Wasser ist, die zwischen dem 0,45- und 0,85-Fachen der Masse M des Schwimmkörpers entspricht, sodass eine Eigenperiode $T_{piston}$ einer Kolbenmode einer vertikalen Schwingung der Wassermasse in der mittigen Öffnung (2) zwischen dem 1,25- und 1,55-Fachen einer Eigenperiode $T_{heave}$ des Schwimmkörpers (1) bei Auf- und Abbewegung liegt, damit in dem Wasser bei einem Seegang mit einer Periode, die im Wesentlichen gleich einer Eigenperiode des sich auf und ab bewegenden Schwimmkörpers (1) ist, vertikale Kräfte, die auf den Schwimmkörper (1) durch eine Wassermasse ausgeübt werden, die in der mittigen Öffnung (2) phasenverschoben in Bezug auf den Seegang schwingt, vertikale Erregerkräfte, die auf den Schwimmkörper (1) durch den Seegang ausgeübt werden, zumindest teilweise ausgleichen.

2. Ringförmiger Schwimmkörper (1) nach Anspruch 1, umfassend mindestens eine Nutzlast.

3. Ringförmiger Schwimmkörper (1) nach Anspruch 2, wobei die mindestens eine Nutzlast mindestens eine Energiegewinnungsvorrichtung umfasst.

4. Ringförmiger Schwimmkörper (1) nach einem der Ansprüche 2 oder 3, wobei die mindestens eine Nutzlast in Bezug auf den Schwimmkörper (1) exzentrisch angeordnet ist.

5. Ringförmiger Schwimmkörper (1) nach Anspruch 4, der ein größeres Tauchvolumen in der Nähe der mindestens einen Nutzlast aufweist.

6. Ringförmiger Schwimmkörper (1) nach einem der vorhergehenden Ansprüche, ferner umfassend mindestens eine Ankervorrichtung.

7. Ringförmiger Schwimmkörper (1) nach einem der vorhergehenden Ansprüche, ferner umfassend mindestens eine Rolldämpfungsvorrichtung.

8. Ringförmiger Schwimmkörper (1) nach einem der vorhergehenden Ansprüche, ferner umfassend mindestens einen Vorsprung, der äußerlich und/oder in der mittigen Öffnung angeordnet ist, um die hydrodynamischen Eigenschaften des Schwimmkörpers anzupassen.

9. Ringförmiger Schwimmkörper (1) nach einem der vorhergehenden Ansprüche, ferner umfassend, in einem Umfang der mittigen Öffnung, mindestens eine Dämpfungskammer, die mit der mittigen Öffnung (2) in begrenzter Verbindung steht.

10. Verfahren zum zumindest teilweisen Aufheben einer Auf- und Abbewegung eines Schwimmkörpers (1) in Wasser, das einem Seegang mit einer Periode ausgesetzt ist, die im Wesentlichen gleich einer Eigenperiode der Auf- und Abbewegung ist, wobei der Schwimmkörper (1) eine Wasserlinienfläche $S_0$, eine mittige Schachtöffnung (2) mit einer Fläche $S_1$ in einer Wasserlinienebene, einen Tiefgang d und eine Masse M gemäß der folgenden Formel aufweist:

$$1{,}25 < \sqrt{\frac{\rho S_0 (d + 0{,}52\sqrt{S_1})}{M + M_a}} < 1{,}55$$

in der $\rho$ eine Dichte des Wassers und $M_a$ eine zusätzliche Masse von phasengleich mit dem Schwimmkörper (1) schwingendem Wasser ist, die zwischen dem 0,45- und 0,85-Fachen der Masse M des Schwimmkörpers entspricht, sodass die Eigenperiode $T_{piston}$ einer Kolbenmode einer vertikalen Schwingung einer Wassermasse in der mittigen Öffnung (2) zwischen dem 1,25- und 1,55-Fachen einer Eigenperiode $T_{heave}$ des Schwimmkörpers (1) bei Auf- und Abbewegung liegt, damit die Wassermasse in der mittigen Öffnung (2) phasenverschoben in Bezug auf den Seegang schwingt, um auf den Schwimmkörper vertikale Kräfte auszuüben, die zu den vom Seegang ausgeübten vertikalen Erregerkräften entgegengesetzt sind.

**Claims**

1. An annular buoyant body (1) including a central moonpool (2), **characterized in that** it is configured with a waterplane area $S_0$, an area $S_1$ of the central moonpool in a waterplane, a draught d and a mass M as defined in the following formula:

$$1.25 < \sqrt{\frac{\rho S_0 (d + 0.52\sqrt{S_1})}{M + M_a}} < 1.55$$

where $\rho$ is the density of the water and $M_a$ is the added mass of water oscillating in phase with the buoyant body (1) and corresponding to in the range 0.45 to 0.85 times the mass M of the buoyant body, in such a manner that a natural period $T_{piston}$ of a vertical oscillation piston mode of said mass of water in the central moonpool (2) lies in the range 1.25 to 1.55 times a natural period $T_{heave}$ of the buoyant body (1) in heave, such that, in water, with swell of a period substantially equal to a natural period of the buoyant body (1) in heave, vertical forces exerted on the buoyant body (1) by a mass of water oscillating in the central moonpool (2) in phase opposition relative to the swell, compensate at least partially for the vertical excitation forces exerted on the buoyant body (1) by the swell.

2. An annular buoyant body (1) according to claim 1, including at least one payload.

3. An annular buoyant body (1) according to claim 2, wherein said at least one payload includes at least one energy harnessing device.

4. An annular buoyant body (1) according to claim 2 or claim 3, wherein at least one payload is situated off-center relative to the buoyant body (1).

5. An annular buoyant body (1) according to claim 4, having a larger immersed volume in the vicinity of the at least one payload.

6. An annular buoyant body (1) according to any one of the preceding claims, further including at least one anchoring device.

7. An annular buoyant body (1) according to any one of the preceding claims, further including at least one roll-damping device.

8. An annular buoyant body (1) according to any one of the preceding claims, further including at least one appendage that is external and/or that is inside the central moonpool in order to adjust the hydrodynamic characteristics of the buoyant body.

9. An annular buoyant body (1) according to any one of the preceding claims, further including, in a periphery of the central moonpool, at least one roll damping chamber in restricted communication with the central moonpool (2).

10. A method of at least partially extinguishing heave motion of a buoyant body (1) that is floating in water subjected to swell of a period substantially equal to a heave natural period, wherein said buoyant body (1) is provided with a waterplane area $S_0$, a central moonpool (2) with an area $S_1$ in a waterplane , a draught d and a mass M as defined in the following formula:

$$1.25 < \sqrt{\frac{\rho S_0(d + 0.52\sqrt{S_1})}{M + M_a}} < 1.55$$

where $\rho$ is the density of the water and $M_a$ is the added mass of water oscillating in phase with the buoyant body (1) and corresponding to in the range 0.45 to 0.85 times the mass M of the buoyant body, in such a manner that the natural period $T_{piston}$ of a vertical oscillation piston mode of said mass of water in the central moonpool (2) lies in the range 1.25 to 1.55 times a natural period $T_{heave}$ of the buoyant body (1) in heave, so that said mass of water oscillates in phase opposition relative to the swell, in order to exert on the buoyant body vertical forces that oppose vertical excitation forces exerted by the swell.

1

2

B → B L

ℓ

3

## FIG.1A

1

3

2

d

4 4

## FIG.1B

FIG.2

FIG.3A

FIG.3B

FIG.4A

FIG.4B

FIG.5A

FIG.5B

FIG.5C

FIG.5D

FIG.6A

FIG.6B

FIG.6C

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009126616 A1

- US 2006045628 A1

**Littérature non-brevet citée dans la description**

- On the piston and sloshing modes in moonpools. *J. Fluid Mech.,* 2001, vol. 430, 27-50

- **B. MOLIN.** On the piston and sloshing modes in moonpools. *J. Fluid Mech.,* 2001, vol. 430, 27-50